# EUROPEAN PATENT SPECIFICATION

(11) **EP 0 269 031 B1**
(45) Date of publication and mention of the grant of the patent: **30.03.1994**
(21) Application number: 87117176.5
(22) Date of filing: 20.11.1987
(51) Int. Cl.: G01N 27/36

(54) **Sheet type glass electrode**
Plattenförmige Glaselektrode
Electrode de verre en forme de feuille

(30) Priority: 27.11.1986 JP 283802/86; 28.11.1986 JP 285371/86
(43) Date of publication of application: 01.06.1988
(73) Proprietor: HORIBA, LTD., Minami-ku Kyoto (JP)
(72) Inventor: Kotani, Haruo, Takatsuki-city Osaka (JP); Tomita, Katsuhiko, Ohtsu-City Shiga-Prefecture (JP); Yada, Takaaki, Nakagyo-ku Kyoto (JP); Nakanishi, Tsuyoshi, Yyoyo-city Kyoto (JP)
(74) Representative: TER MEER STEINMEISTER & PARTNER GbR

(56) References cited:
- US-A- 4 133 735
- US-A- 4 282 079
- PATENT ABSTRACTS OF JAPAN, vol. 10, no. 308 (P-508)[2364], 21st October 1986; & JP-A-61 120 958

## Description

### BACKGROUND OF THE INVENTION

### Field of the Invention

The present invention relates to a sheet type glass electrode for measuring pH, pNa and the like.

### Description of the Prior Art

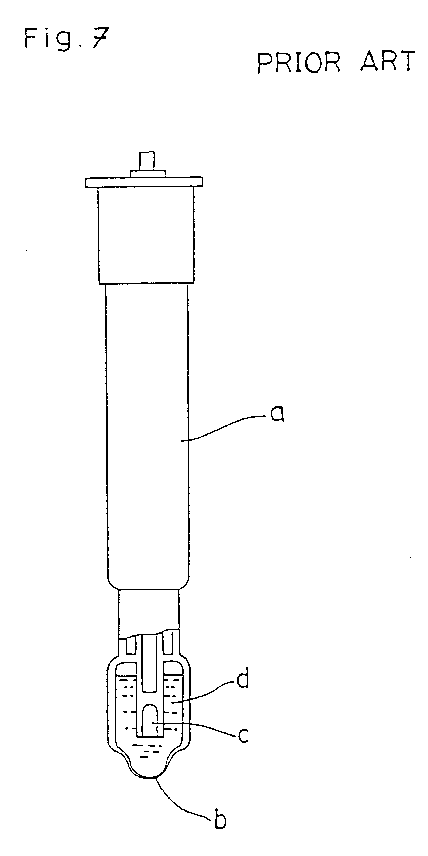

The conventional electrodes for measuring ions, such as pH and pNa as shown in Fig. 7, have been generally called glass electrodes comprising a support tube a formed of an electrically insulating glass, a semi-spherical ion-response glass membrane b responsive to ions, such as pH and pNa ions, formed by the balloon method and joined to a pointed end of the support tube a, and an internal electrode c and an internal solution d enclosed in the support tube a.

However, the above described ion-measuring glass electrode having the conventional construction as shown in Fig. 7 exhibits disadvantages in that since its ion-response glass membrane b must be formed by the balloon method. The adjustment of fire and blowing for adjusting the film thickness during its processing or the prevention of microcracks caused by joining the ion-response glass membrane b to the support tube a require a considerable skilled art, so that it is difficult to mass-produce, whereby not only the costs of the production are remarkably high but also the construction cannot be other than large-sized, and the operation, maintenance and the like are also unfavourable.

As to the glass electrode having the conventional construction as shown in Fig. 7, the semi-spherical ion-response glass membrane b of a predetermined film thickness (0.1 to 0.3 mm) has to be prepared by the balloon method requiring a considerable skilled art. In case of preparing a pending sheet type glass electrode, an ion-response super-thin glass membrane, such as a pH-response glass membrane, which has to be of flat plate-like shape and requires a film thickness near to the limit of glassification, could not be produced yet at present, so that a pending sheet type glass electrode has not been realized so far.

Besides, in order to obtain a sufficiently reliable sheet type glass electrode, there is a problem in that a high electrical insulation must be secured between the flat plate-like ion-response glass membrane, the support layer and the substrate.

The above described problem is also the same with composite electrodes in which a glass electrode is integrated with a reference electrode.

US-A-4 282 079 discloses a planar glass ion-selective electrode comprising an inherently conductive internal reference electrode, a cation-selective glass membrane and means for adhering the reference electrode to the glass membrane. The thickness of the glass membrane is uniform in regions intended for contact with a sample for analysis.

US-A-4 133 735 discloses a sheet type glass electrode comprising a substrate, an electrode comprising an internal electrode portion and a lead portion on the upper surface of said substrate, and a flat ion-sensitive membrane layer.

The present invention was made in view of the above described conventional actual state. It is an object of the present invention to overcome the above described various kinds of problems by providing a sheet type glass electrode which is superior in reliability, operation and maintenance and can be easily and inexpensively produced.

The invention relates to a sheet type glass electrode being open toward an upper surface side comprising
- a substrate (A) formed of a material having a sufficiently high electrical insulating property,
- an electrode (D) comprising an internal electrode portion (B) and a lead portion (C) stuck to an upper surface of said substrate (A), and
- a flat plate-like ion-response glass membrane (H), characterized by
- a support layer (F) formed of a material having a sufficiently high electrical insulating property which Is provided with a hole (E) at a place corresponding to said internal electrode portion (B) being formed on the upper surface of said substrate (A) under the condition that said lead portion (C) and its circumference are exposed, said hole (E) in the support layer (F) being tightly filled with a gelatinized internal solution (G),
- said glass membrane (H) being fixedly mounted on the upper surface of said support layer (F) by the use of adhesives (I) having a sufficiently high electrical insulating property so that a lower surface thereof may be closely stuck to an upper surface of said gelatinized internal solution (G).

The invention relates further to a sheet type composite electrode comprising the above glass electrode P and a sheet type reference electrode R which are placed side by side under the condition that they are open toward an upper surface side.

### BRIEF DESCRIPTION OF THE DRAWINGS

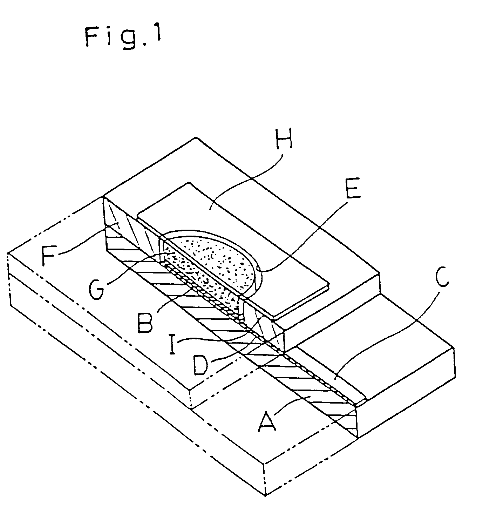

**Fig. 1** is a partially sectioned perspective view showing the external appearance of a basic construction of the sheet type glass electrode according to the present invention.
   In addition, a construction of a pH-measuring sheet type composite electrode as a preferred embodiment of the sheet type glass electrode according to the present invention is shown in Figs. 2 to 6, in which
**Fig. 2** is a disintegrated perspective view;
**Fig. 3** is a sectional view of Fig. 2 taken along the line III-III thereof;
**Fig. 4** is a sectional view of Fig. 2 taken along the line IV-IV thereof;
**Fig. 5** is a perspective view showing an external appearance of an unit comprising a casing which is provided with a pH-measuring sheet type composite electrode; and
**Fig. 6** is a perspective view showing an external appearance of the connection of said unit with a measuring device body.

The technical background of the present invention and the problems of the prior art are described with reference to Fig. 7, which is a partially sectioned side view showing an ion-measuring glass electrode of the conventional construction.

### DESCRIPTION OF THE PREFERRED EMBODIMENTS

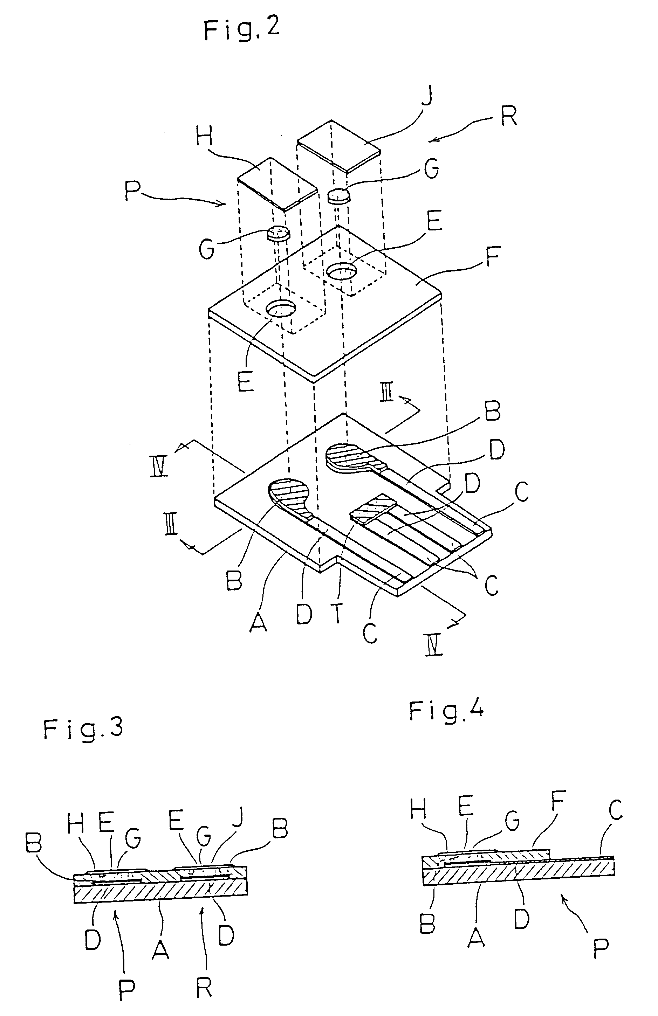

The preferred embodiments of the present invention are below described with reference to the drawings (Fig. 2 to Fig. 6). Here, a sheet type composite electrode for the use in the measurement of pH is illustrated.

Fig. 2, which is a disintegrated perspective view, Fig. 3, which is a sectional view of Fig. 2 taken along the line III-III thereof, and Fig. 4, which is a sectional view of Fig. 2 taken along the line IV-IV thereof, show a sheet type composite electrode for the use in the measurement of pH according to the preferred embodiment of the present invention.

Referring to Figs. 2 to 4, reference mark A designates a substrate formed of materials (in the present preferred embodiment a polyethylene terephthalate plate) having a sufficiently high electrical insulating property even when immersed in a solution including electrolytes, such as organic high molecular materials, for example polyethylene, polypropylene, polyethylene terephthalate, acryl or polyfluoroethylene, and inorganic materials, for example silica glass or pyrex glass, and provided with two pairs of electrodes D comprising an inside pair of electrodes and an outside pair of electrodes formed by sticking a metal selected from the group consisting of electrically conductive Ag, Cu, Au and Pt and alloys thereof, or a paste including said metal, or a semiconductor, such as IrO₂ and SnO₂, to an upper surface of the substrate A by a physical plating method, such as vacuum deposition method and CVD method, or a chemical plating method, such as electrolytic method and non-electrolytic method, or a printing method, such as silk screen method, anastatic printing and flat plate printing (in the present preferred embodiment the upper surface of said substrate A is subjected to the graft processing and the anchoring process, e.g. by a silane coupling agent and then, an Ag paste is printed in the upper surface of said substrate A by the silk screen printing method). In addition, a base end portion positioned at one end edge portion of the substrate A in every electrode D is formed as the lead portion C of every electrode. Besides, the other nearly circular pointed end portion positioned at the nearly central portion of said substrate A in the outside pair of electrodes D, D are formed as the internal electrode positions B, B coated with an electrode material, such as AgCl, (by physical plating methods or chemical plating methods or printing methods in the same manner as above described) and a temperature-compensating electrode portion T is provided extending between other pointed end portions positions at a nearly central portion of said substrate A in the inside pair of electrodes D, D. For example a thermistor is used as said temperature-compensating electrode portion T.

And, said substrate A is provided with a support layer F formed of a material having a sufficiently high electrical insulating property in the same manner as the substrate A and provided with the holes E, E at the positions corresponding to said both internal electrode portions B, B (in the present preferred embodiment a polyethylene terephthalate layer) on the upper surface thereof under the condition that all of said lead portions C and their circumferences are exposed by for example the screen printing method or the hot melting means using adhesives (for example polyolefine series adhesives or silicon resin series adhesives) capable of securing a sufficiently high electrical insulating property (for example 10 MΩ or more). Also the upper surface of this support layer F is subjected to the grafting process and the anchoring process, e.g. by means of a silane coupling agent.

In addition, said both holes E, E of said support layer F are filled with a disc-like gelatinized internal solution G, G formed by adding a gelatinizer (for example agar-agar, gelatine, glue, alginic acid or various kinds of acrylic water-absorbing polymer) and a gel-evaporation inhibitor (for example glycerine or ethylene glycol) to a basic internal solution (for example obtained by adding a phosphoric acid buffer solution to a 3.3 M-aqueous solution of KCl supersaturated with AgCl) by for example heating to convert into a paste and then printing by the screen printing method so that the upper surface of the disc-like gelatinized internal solution G, G may be slightly projected over the upper surface of said support layer F, and the disc-like gelatinized internal solution G, G is overlapped on said internal electrode portions B, B.

In addition, above the gelatinized internal solution G in one hole E of said both holes E, E, a flat plate-like pH-response glass membrane H produced by subjecting a pre-formed and preheated flat plate-like super-thin glass having a determined size to a high-speed surface heating treatment is fixedly mounted on the upper surface of said support layer F along the circumference thereof by the use of adhesives I having a sufficiently high electrical insulating property (for example organic high molecular adhesives, such as silicon series adhesives, epoxy series adhesives or urethane series adhesives, containing e.g. a silane coupling agent) so that the lower surface of the flat plate-like pH-response glass membrane H may be contacted to the upper surface of said gelatinized internal solution G and the gelatinized internal solution G may be sealed up tightly in said hole E, to form a pH-measuring glass electrode P.

Besides, above the gelatinized internal solution G in the other hole E, a liquid junction membrane J formed, for example of an inorganic sintered porous material or an organic high molecular porous material impregnated with KCl is fixedly mounted on the upper surface of said support layer F along the circumference thereof so that the lower surface of the liquid junction membrane J may be contacted to the upper surface of said gelatinized internal solution G to form a reference electrode R.

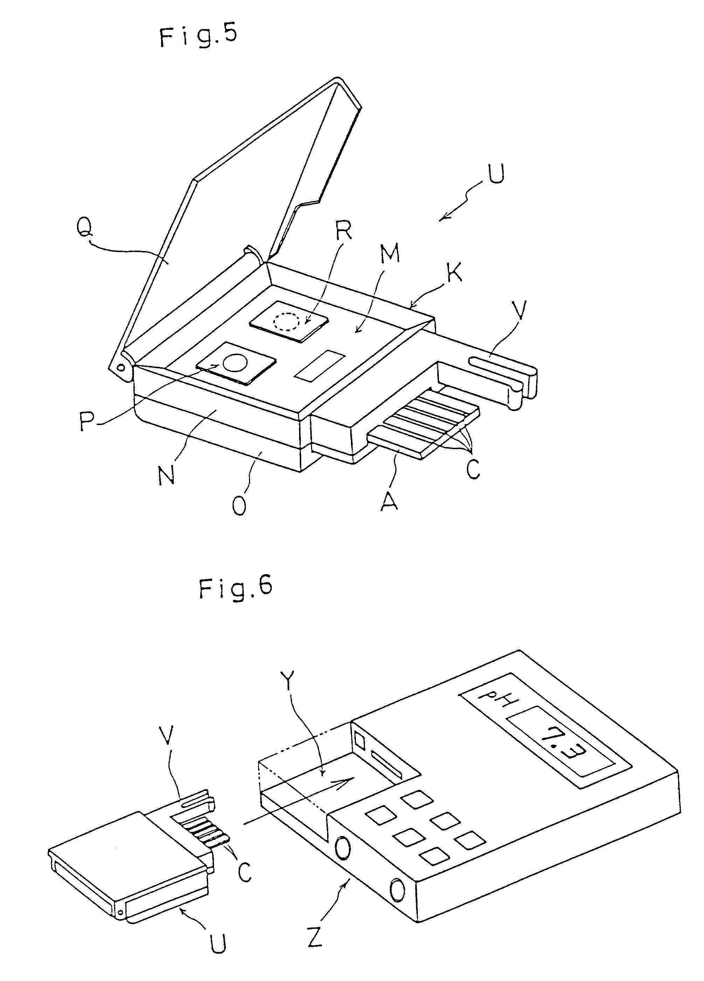

A pH-measuring sheet type composite electrode arranged in the above described manner has a thickness of about 0.5 mm as a whole in the present preferred embodiment and is placed in a casing K made of synthetic resins, as shown in Fig. 5, so that said pH-measuring glass electrode P and said reference electrode R may be open toward the upper surface side and one end edge portion of the substrate A provided with said lead portions C may be protruded toward the outside to form a tip-like measuring electrode unit U. The casing K having attached the tip-like measuring electrode unit U comprises an upper frame member N forming a dented portion M, into which the sample solution is poured, a bottom cover O of the upper frame member N, and an upper cover Q, which is swingably and closably mounted on one end edge portion of said upper frame member N, of said dented portion M into which the sample solution is poured. In addition, the casing K (in the present preferred embodiment a portion of said upper frame member) is provided with an engaging projection V for a measuring device body Z, which will be described later, connected at the end edge of the side from which said lead portions C are projected.

With the tip-like measuring electrode unit U including the pH-measuring sheet type composite electrode having the above described construction, the sample solution of one drop to several drops is poured into said dented portion M after having opened said upper cover Q to bring the pH-measuring glass electrode P and the reference electrode R positioned on the bottom portion of the dented portion M into sufficient contact with the sample solution and then, the upper cover Q is closed. Subsequently, the tip-like measuring electrode unit U is inserted into the fitting portion Y of the measuring device body Z, as shown in Fig. 6, which is constructed as a card type bench electronic calculator at said lead portions C and engaging projection V to measure pH of the sample solution.

In the present preferred embodiment, said pH-response glass membrane H is 10 mm deep, 8 mm wide and 0,1 mm thick.

Said ion-response glass membrane is fixedly mounted on the support layer by the use of adhesives having a sufficiently high electrical insulating property, so that superior effects are provided by producing a sheet tpye glass electrode having a desired high electrical insulating property very easily and inexpensively in comparison with the conventional glass electrode. As a result, the desired object of remarkably compactizing and improving an ion-measuring glass electrode in view of reliability, operation and maintenance has been sufficiently achieved.

## Claims

1. A sheet type glass electrode being open toward an upper surface side comprising
- a substrate (A) formed of a material having a sufficiently high electrical insulating property,
- an electrode (D) comprising an internal electrode portion (B) and a lead portion (C) stuck to an upper surface of said substrate (A), and
- a flat plate-like ion-response glass membrane (H),
**characterized by**
- a support layer (F) formed of a material having a sufficiently high electrical insulating property which is provided with a hole (E) at a place corresponding to said internal electrode portion (B) being formed on the upper surface of said substrate (A) under the condition that said lead portion (C) and its circumference are exposed, said hole (E) in the support layer (F) being tightly filled with a gelatinised internal solution (G),
- said glass membrane (H) being fixedly mounted on the upper surface of said support layer (F) by the use of adhesives (I) having a sufficiently high electrical insulating property so that a lower surface thereof may be closely stuck to an upper surface of said gelatinised internal solution (G).

2. A sheet type composite electrode comprising the glass electrode according to claim 1 and a sheet type reference electrode (R) which are placed side by side under the condition that they are open toward an upper surface side.

## Patentansprüche

1. Glaselektrode vom Platten- bzw. Blatt-Typ, welche auf einer oberen Oberflächenseite offen ist, umfassend
- ein Substrat (A), welches aus einem Material mit einem ausreichend hohen elektrischen Isolationsvermögen gebildet ist,
- eine Elektrode (D), umfassend einen Innenelektrodenbereich (B) und einen Leitungsbereich (C), welche an einer oberen Oberfläche des Substrats (A) befestigt ist, und
- eine flache, plattenförmige Ionenansprech-Glasmembran (H),
**gekennzeichnet durch**
- eine aus einem Material mit einem ausreichend hohen elektrischen Isolationsvermögen gebildete Trägerschicht (F), welche mit einem Loch (E) an einer Stelle versehen ist, entsprechend dem auf der oberen Oberfläche des Substrats (A) gebildeten Innenelektrodenbereichs (B), derart, daß der Leitungsbereich (C) und dessen Umkreis freiliegen, wobei das Loch (E) in der Trägerschicht (F) prall mit einer gelatinierten Innenlösung (G) gefüllt ist,
- eine feste Anordnung der Glasmembran (H) auf der oberen Oberfläche der Trägerschicht (F) mittels eines Klebers (I) mit einem ausreichend hohen elektrischen Isolationsvermögen, so daß deren untere Oberfläche dicht an einer oberen Oberfläche der gelatinierten Innenlösung (G) anhaften kann.

2. Zusammengesetzte Elektrode vom Platten- bzw. Blatt-Typ, umfassend die Glaselektrode nach Anspruch 1 und eine plattenförmige Referenzelektrode (R), welche derart Seite an Seite angeordnet sind, daß sie auf einer oberen Oberflächenseite offen sind.

## Revendications

1. Electrode en verre du type en feuille ouverte du côté d'une surface supérieure comprenant
- un substrat (A) formé d'un matériau ayant une propriété d'isolation électrique suffisamment élevée,
- une électrode (D) comprenant une partie (B) d'électrode interne et une partie de connexion (C) collée à une surface supérieure dudit substrat (A), et
- une membrane plate (H) en verre, sensible aux ions, en forme de plaque,
**caractérisée par**
- une couche support (F) formée d'un matériau ayant une propriété d'isolation électrique suffisamment élevée qui comporte un trou (E) en un emplacement correspondant à ladite partie (B) d'électrode interne formée sur la surface supérieure dudit substrat (A) à la condition que ladite partie (C) de connexion et sa circonférence soient exposées, ledit trou (E) dans la couche support (F) étant rempli entièrement d'une solution (G) interne gélatinifiée,
- ladite membrane (H) en verre étant montée de façon fixe sur la surface supérieure de ladite couche support (F) en utilisant des produits adhésifs (I) ayant une propriété d'isolation électrique suffisamment élevée de telle sorte que sa surface inférieure peut être collée fermement à une surface supérieure de ladite solution (G) interne gélatinifiée.

2. Electrode composite du type en feuille comprenant l'électrode en verre conforme à la revendication 1 et une électrode (R) de référence du type en feuille qui sont placées côte-à-côte à la condition qu'elles soient ouvertes du côté d'une surface supérieure.
